# EUROPEAN PATENT SPECIFICATION

(11) **EP 3 297 230 B1**
(45) Date of publication and mention of the grant of the patent: **29.12.2021**
(21) Application number: 15892348.2
(22) Date of filing: 10.09.2015
(51) Int. Cl.: H04L 12/801, H04L 12/803, H04L 12/707

(54) **TRANSMISSION PROCESSING METHOD AND DEVICE**
ÜBERTRAGUNGSVERARBEITUNGSVERFAHREN UND -VORRICHTUNG
PROCÉDÉ ET DISPOSITIF DE TRAITEMENT DE TRANSMISSION

(30) Priority: 15.05.2015 CN 201510251366
(43) Date of publication of application: 21.03.2018
(73) Proprietor: ZTE Corporation, Shenzhen, Guangdong 518057 (CN)
(72) Inventor: YONG, Wentao, Shenzhen Guangdong 518057 (CN)
(74) Representative: Studio Torta S.p.A.
(86) International application number: PCT/CN2015/089384
(87) International publication number: WO 2016/183970

(56) References cited:
- CN-A- 101 159 669
- CN-A- 101 447 929
- CN-A- 103 152 251
- CN-A- 103 428 101
- KRISHNAN RAM RAMKI ET AL: "Analysis of data center SDN controller architectures: Technology and business impacts", 2015 INTERNATIONAL CONFERENCE ON COMPUTING, NETWORKING AND COMMUNICATIONS (ICNC), IEEE, 16 February 2015 (2015-02-16), pages 104-109, XP032752603, DOI: 10.1109/ICCNC.2015.7069324 [retrieved on 2015-03-26]
- Yukihiro Nakagawa ET AL: "DomainFlow : practical flow management method using multiple flow tables in commodity switches", Proceedings of the ninth ACM conference on Emerging networking experiments and technologies, CoNEXT '13, 1 January 2013 (2013-01-01), pages 399-404, XP055374962, New York, New York, USA DOI: 10.1145/2535372.2535406 ISBN: 978-1-4503-2101-3

## Description

### TECHNICAL FIELD

The present disclosure relates to the communication technical field, and more particularly to a transmission processing method and device.

### BACKGROUND

For network administrators, network link traffic is a relatively important indicator, from which the administrators can learn the latest developments and changes in networks. By observing the link traffic status, the administrators can get the latest symptoms of the networks.

If traffic on a link is congested, some intelligent traffic engineering in a Software Defined Network (SDN) may schedule some traffic to other equal-cost paths to relieve the traffic pressure on the congested links and make the link traffic conditions automatically return to normal. However, in some special cases, it seems impossible to address the link congestion problem by only relying on the intelligent scheduling of the system. In other words, it is necessary for network administrators to manually intervene the link traffic in order to ensure that traffic of some important services is not congested. However, related arts cannot not achieve manual scheduling.

There is no effective solution to the problem with related arts which address the link congestion by only relying on the intelligent scheduling of the system.

Document by R. Krishnan, titled "analysis of data center SDN controller architectures: technology and business impacts", 2015 International conference on computing, networking and communications, cloud computing and big data, pages 104-109, discloses architectural possibilities of a typical data center network comprised of a software overlay and hardware underlay. Document by Yukihiro Nakagawa, titled "DomainFlow: Practical Flow Management Method using Multiple Flow Tables in Commodity Switches", discloses a scalable network with high bisection bandwidth and high availability which requires efficient use of the multiple paths between pairs of end hosts. OpenFlow is an innovative technology and enables fine-grained, flow level control of Ethernet switching. However, the flow table structure defined by OpenFlow is not hardware friendly and the scalability is limited by the switch device. OpenFlow is also not sufficient for fast multipath failover. To overcome these limitations, DomainFlow in which the network is split into sections and exact matches are used where possible to enable practical flow management using OpenFlow for commodity switches are proposed. A prototype of DomainFlow to multipath flow management in the Virtual extensible LAN (VXLAN) overlay network environment is applied. The total number of flow entries was reduced to 1/128 using currently available commodity switches, which was not possible before. However, the above-identified issues remain unsolved.

### SUMMARY

The present invention provides a transmission processing method and device according to the appended claims, to at least solve the problem with related arts which address the link congestion by only relying on the intelligent scheduling of the system.

According to an aspect of embodiments of the present disclosure, there is provided a transmission processing method. The method includes the following steps. A transfer request is received from a user. The transfer request is used for transferring a flow on a transmission path where link congestion occurs to a preset path to transmit the flow. The preset path is one of preset equal-cost multiple paths of the transmission path. According to the transfer request, the flow on the transmission path where link congestion occurs is transferred to the preset path to transmit the flow.

According to the invention, according to the transfer request, transferring the flow on the transmission path where link congestion occurs to the preset path to transmit the flow, includes the following steps. For an Access Control List (ACL) of each device in the preset path, sending to the ACL a flow rule which defines a count action.

For an Access Control List (ACL) of each device in the preset path, a flow rule which corresponds to an action for designating an output port is sent. According to the output flow rule, the flow on the transmission path where link congestion occurs is transferred to the preset path to transmit the flow.

According to the invention, before receiving from a user a transfer request for transferring a flow on a transmission path where link congestion occurs to a preset path to transmit the flow, the method further includes the following steps. Setting information for setting a flow path by the user is received. The setting information includes: Virtual Routing Forwarding (VRF), a source IP subnet/mask, a source port, a source switch, a destination IP subnet/mask, a destination port, a destination switch, or a protocol. The protocol includes any one of a Transmission Control Protocol (TCP), a User Datagram Protocol (UDP), an Internet Control Messages Protocol (ICMP), an Open Shortest Path First (OSPF) protocol, a Stream Control Transmission Protocol (SCTP), a Datagram Congestion Control Protocol (DCCP), and a Multipath Transmission Control Protocol (MPTCP).

According to an exemplary embodiment, after calculating the equal-cost multiple paths of the flow according to a setting result, the method further includes the following step. The equal-cost multiple paths of the flow are marked in a topology structure of the flow path. According to an exemplary embodiment, the method further includes the following step. On a display interface, the topology structure of the flow path is displayed and a traffic state of the flow path is displayed in the topology structure of the flow path. The traffic state includes any one of normal, early warning, and congestion.

According to an exemplary embodiment, after according to the transfer request, transferring the flow on the transmission path where link congestion occurs to the preset path to transmit the flow, the method further includes the following step. The topology structure of the flow path is updated.

According to another aspect of embodiments of the present disclosure, there is further provided a transmission processing device, including a first receiving module and a transmission module. The first receiving module is configured to receive from a user a transfer request for transferring a flow on a transmission path where link congestion occurs to a preset path to transmit the flow. The preset path is one of preset equal-cost multiple paths of the transmission path. The transmission module is configured to, according to the transfer request, transfer the flow on the transmission path where link congestion occurs to the preset path to transmit the flow.

According to the invention, the transmission module includes a sending unit and a transmission unit. The sending unit is configured to, for an Access Control List (ACL) of each device in the preset path, send a flow rule which corresponds to an action for designating an output port. The transmission unit is configured to, according to the output flow rule, transfer the flow on the transmission path where link congestion occurs to the preset path to transmit the flow. The sending unit is also configured to, for an Access Control List (ACL) of each device in the preset path, send to the ACL a flow rule which defines a count action.

The device further includes a second receiving module, a setting module and a calculation module. The second receiving module is configured to receive setting information for setting a flow path by the user. The setting information includes Virtual Routing Forwarding (VRF), a source IP subnet/mask, a source port, a source switch, a destination IP subnet/mask, a destination port, a destination switch, or a protocol. The protocol includes any one of a Transmission Control Protocol (TCP), a User Datagram Protocol (UDP), an Internet Control Messages Protocol (ICMP), an Open Shortest Path First (OSPF) protocol, a Stream Control Transmission Protocol (SCTP), a Datagram Congestion Control Protocol (DCCP), and a Multipath Transmission Control Protocol (MPTCP). The setting module is configured to set the flow path according to the setting information. The calculation module is configured to calculate the equal-cost multiple paths of the flow according to a setting result.

According to an exemplary embodiment, the device further includes a marking module. The marking module is configured to mark the equal-cost multiple paths of the flow in a topology structure of the flow path.

In the embodiments of the present disclosure, a transfer request is received from a user. The transfer request is used for transferring a flow on a transmission path where link congestion occurs to a preset path to transmit the flow. The preset path is one of preset equal-cost multiple paths of the transmission path. According to the transfer request, the flow on the transmission path where link congestion occurs is transferred to the preset path to transmit the flow. The embodiments of the present disclosure can overcome the deficiency with related arts which address the link congestion by only relying on the intelligent scheduling of the system, thereby resulting in great reduction in occurrence possibility of link congestion in the system and improved user experience.

### BRIEF DESCRIPTION OF THE DRAWINGS

The accompanying drawings, which constitute a part of the present disclosure, are used to provide a further understanding of the embodiments of the present disclosure. The exemplary embodiments and descriptions thereof are used to explain the present disclosure, but are not intended to unduly limit the present disclosure.
Fig. 1 is a flow chart schematically showing a transmission processing method according to an embodiment of the present disclosure.
Fig. 2 is a block diagram schematically showing a transmission processing device according to an embodiment of the present disclosure.
Fig. 3 is a block diagram schematically showing a transmission processing device according to an embodiment of the present disclosure.
Fig. 4 is a block diagram schematically showing a transmission processing device according to an embodiment of the present disclosure.
Fig. 5 is a block diagram schematically showing a transmission processing device according to an embodiment of the present disclosure.
Fig. 6 is a block diagram schematically showing a traffic scheduling device according to an exemplary embodiment of the present disclosure.
Fig. 7 is a flow chart schematically showing a transmission processing method according to an exemplary embodiment of the present disclosure.
Fig. 8 is a flow chart schematically showing a transmission processing method according to an exemplary embodiment of the present disclosure.
Fig. 9 is a flow chart schematically showing a transmission processing method according to an exemplary embodiment of the present disclosure.
Fig. 10 is a flow chart schematically showing a transmission processing method according to an exemplary embodiment of the present disclosure.
Fig. 11 is a flow chart schematically showing a transmission processing method according to an exemplary embodiment of the present disclosure.

### DETAILED DESCRIPTION

Hereinafter, the present disclosure will be described in detail with reference to the accompanying drawings and exemplary embodiments. It should be noted that, in the case of no conflict, the embodiments in the present disclosure and the features in the embodiments may be combined with each other.

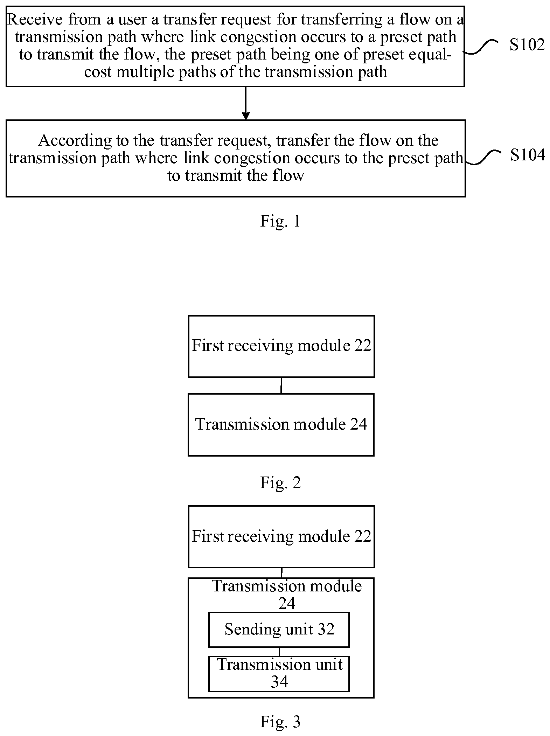

An embodiment of the present disclsoure provides a transmission processing method. Fig. 1 is a flow chart schematically showing a transmission processing method according to an embodiment of the present disclosure. As shown in Fig. 1, the method includes the following steps.

In step S102, a transfer request, which is used for transferring a flow on a transmission path where link congestion occurs to a preset path to transmit the flow, is received from a user. The preset path is one of preset equal-cost multiple paths of the transmission path.

In step S104, according to the transfer request, the flow on the transmission path where link congestion occurs is transferred to the preset path to transmit the flow.

By the above steps, a transfer request, which is used for transferring a flow on a transmission path where link congestion occurs to a preset path to transmit the flow, is received from a user. The preset path is one of preset equal-cost multiple paths of the transmission path. According to the transfer request, the flow on the transmission path where link congestion occurs is transferred to the preset path to transmit the flow. The embodiment of the present disclosure can overcome the deficiency with related arts which address the link congestion by only relying on the intelligent scheduling of the system, thereby resulting in great reduction in occurrence possibility of link congestion in the system and improved user experience.

There arc many ways to transfer the flow on the transmission path where link congestion occurs to the preset path to transmit the flow according to the transfer request. According to an exemplary embodiment, the flow on the transmission path where link congestion occurs may be transferred to the preset path to transmit the flow using the following approach. For an ACL of each device in the preset path, a flow rule, which defines an action for designating an output port, is sent. The output port is a corresponding output port of the preset path on each device. According to the output flow rule, the flow on the transmission path where link congestion occurs is transferred to the preset path to transmit the flow.

Before receiving from a user a transfer request for transferring a flow on a transmission path where link congestion occurs to a preset path to transmit the flow, setting information for setting a flow path by the user is received. The setting information includes: Virtual Routing Forwarding (VRF), a source IP subnet/mask, a source port, a source switch, a destination IP subnet/mask, a destination port, a destination switch, or a protocol. The protocol includes any one of a Transmission Control Protocol (TCP), a User Datagram Protocol (UDP), an Internet Control Messages Protocol (ICMP), an Open Shortest Path First (OSPF) protocol, a Stream Control Transmission Protocol (SCTP), a Datagram Congestion Control Protocol (DCCP), and a Multipath Transmission Control Protocol (MPTCP). The flow path is set according to the setting information. The equal-cost multiple paths of the flow are calculated according to a setting result.

In order to clearly distinguish the equal-cost multiple paths, the equal-cost multiple paths of the flow may be marked in a topology structure of the flow path. There are many ways to mark the multiple paths. According to an exemplary embodiment, the cqual-cost multiple paths may be distinguished by different colors.

In order to enable the user to conveniently determine whether congestion occurs, the topology structure of the flow path may be displayed on a display interface and a traffic state of the flow path may be displayed in the topology structure of the flow path. The traffic state includes any one of normal, early warning, and congestion. For example, if the traffic state is early warning or congestion, the flow may be dragged to one of the equal-cost multiple paths for transmission.

According to an exemplary embodiment, after according to the transfer request, transferring the flow on the transmission path where link congestion occurs to the preset path to transmit the flow, the topology structure of the flow path may further be updated.

An embodiment of the present disclosure further provides a transmission processing device, which is configured to implement the foregoing embodiments and exemplary embodiments, and details will not be repeated again. As used below, the term "module" may be a combination of software and/or hardware that achieves a predetermined function. Although the devices described in the following embodiments are preferably implemented in software, the implementation of hardware or a combination of software and hardware is also possible and can be contemplated

Fig. 2 is a block diagram schematically showing a transmission processing device according to an exemplary embodiment of the present disclosure. As shown in Fig. 2, the device includes a first receiving module 22 and a transmission module 24.

The first receiving module 22 is configured to receive from a user a transfer request for transferring a flow on a transmission path where link congestion occurs to a preset path to transmit the flow. The preset path is one of preset equal-cost multiple paths of the transmission path.

The transmission module 24 is configured to, according to the transfer request, transfer the flow on the transmission path where link congestion occurs to the preset path to transmit the flow.

Fig. 3 is a block diagram schematically showing a transmission processing device according to an exemplary embodiment of the present disclosure. As shown in Fig. 3, the transmission module 24 includes a sending unit 32 and a transmission unit 34.

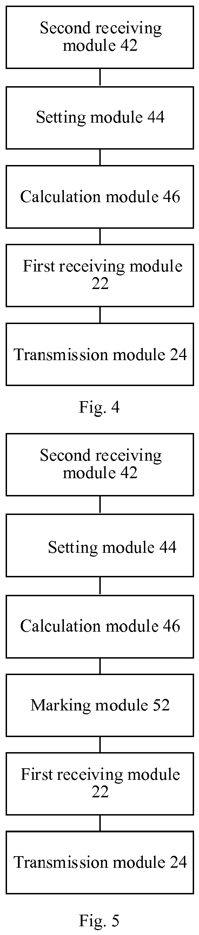

The sending unit 32 is configured to, for an Access Control List (ACL) of each device in the preset path, send a flow rule which corresponds to an action for designating an output port. The transmission unit 34 is configured to, according to the output flow rule, transfer the flow on the transmission path where link congestion occurs to the preset path to transmit the flow. Fig. 4 is a block diagram schematically showing a transmission processing device according to an exemplary embodiment of the present disclosure. As shown in Fig. 4, the device further includes a second receiving module 42, a setting module 44 and a calculation module 46. The second receiving module 42 is configured to receive setting information for setting a flow path by the user. The setting information includes: Virtual Routing Forwarding (VRF), a source IP subnet/mask, a source port, a source switch, a destination IP subnet/mask, a destination port, a destination switch, or a protocol, wherein the protocol includes any one of a Transmission Control Protocol (TCP), a User Datagram Protocol (UDP), an Internet Control Messages Protocol (ICMP), an Open Shortest Path First (OSPF) protocol, a Stream Control Transmission Protocol (SCTP), a Datagram Congestion Control Protocol (DCCP), and a Multipath Transmission Control Protocol (MPTCP).

The setting module 44 is configured to set the flow path according to the setting information. The calculation module 46 is configured to calculate the equal-cost multiple paths of the flow according to a setting result.

Fig. 5 is a block diagram schematically showing a transmission processing device according to an exemplary embodiment of the present disclosure. As shown in Fig. 5, the device further includes a marking module 52.

The marking module 52 is configured to mark the equal-cost multiple paths of the flow in a topology structure of the flow path.

Aiming at the above-mentioned problem with related arts, the present disclosure will be described with reference to exemplary embodiments. The exemplary embodiments may be combined with the above described exemplary embodiments and exemplary implementations thereof.

In order to ensure that the traffic of some important services is not congested, it is necessary for a network administrator to manually intervene the link traffic. The network administrator configures the service flow that needs to be observed. When the link of the observed service flow is found to be congested, the network administrator can artificially schedule the service flow to other equivalent paths for transmission. In the exemplary embodiment, according to the static flow observation (which may be corresponding to the data flow of a certain network service) configured by the administrator, an Equal-Cost Multipath Routing (ECMP) corresponding to the flow observation is rendered on the network topology graph, and through the animation effects of streaming, the path which the flow is currently going through may be reflected. When the administrator finds that link congestion occurs in a flow transmission path which is observed by him or her, the administrator may drag the flow to other normal cqual-cost paths in the network topology by a dragging manner, in order to guarantee the normal data transmission of the service flow. In ECMP, there exists a network environment in which there are many different links leading to the same destination address. If traditional routing technologies are used, the packets destined for the destination address can only use one of the links and the other links are in a backup state or an invalid state. In addition, mutual switching takes time in a dynamic routing environment. The equal-cost multipath routing protocol can use multiple links simultaneously in the network environment, which not only increases the transmission bandwidth but also backs up data transmission of invalid links without delay and packet loss.

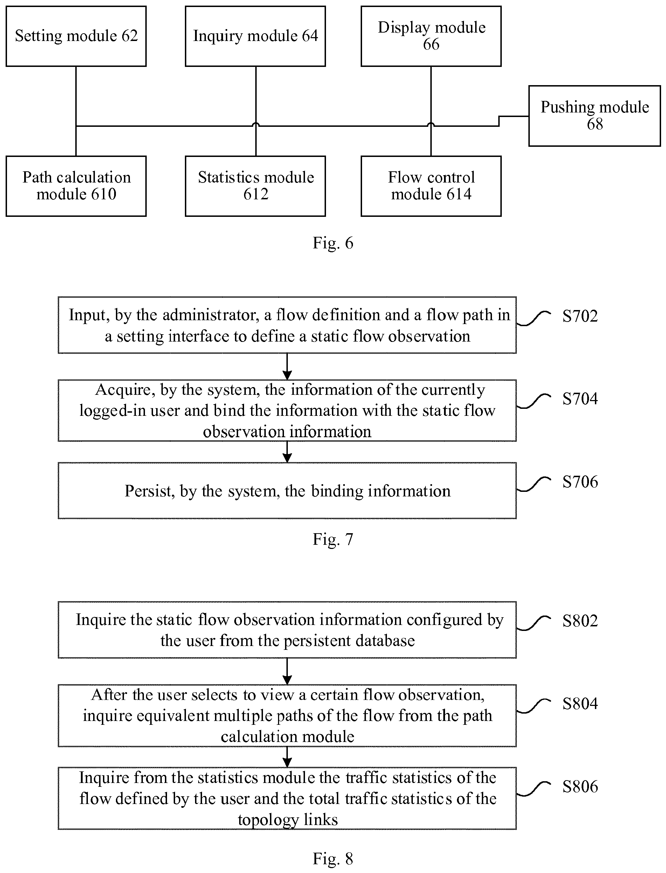

An embodiment of the present disclosure provides a traffic scheduling device. Fig. 6 is a block diagram schematically showing a traffic scheduling device according to an exemplary embodiment of the present disclosure. As shown in Fig. 6, the device includes a setting module 62, an inquiry module 64, a display module 66, a pushing module 68, a path calculation module 610, a statistics module 612, and a flow control module 614. The functions of these modules can be collectively realized by the above described modules and units. The modules will be described below.

The setting module 62 is configured to set a static flow observation, including a flow definition and a flow path. The flow definition contains Virtual Routing Forwarding (VRF), and a 5-tuple (a source IP subnet/mask, a source port, a destination IP subnet/mask, a destination port, a protocol), and these parameters all support globbing. The flow path contains the source switch and the destination switch. Since the 5-tuple supports globbing, the path cannot be determined by the 5-tuplc, or there may be too many paths. Therefore, the source and destination switches need to be specified to determine the path, and the source and destination switches need to match the 5-touple. Data configured by different administrators are isolated from each other. Fig. 7 is a flow chart schematically showing a transmission processing method according to an exemplary embodiment of the present disclosure. As shown in Fig. 7, the method may include the following steps.

In step S702, the administrator inputs a flow definition and a flow path in a setting interface to define a static flow observation.

In step S704, the system acquires the information of the currently logged-in user and binds the information with the static flow observation information.

In step S706, the system persists the binding information.

The inquiry module 64 is configured to inquire information set by the administrator, such as the static flow observation, the flow path, the flow statistics, and the link traffic and so on, to facilitate the administrator to monitor the running status of the network and determine whether to drag flows to change the flow path to ensure the normal transmission of the service data. Fig. 8 is a flow chart schematically showing a transmission processing method according to an exemplary embodiment of the present disclosure. As shown in Fig. 8, the method may include the following steps.

In step S802, the static flow observation information configured by the user is inquired from the persistent database.

In step S804, after the user selects to view a certain flow observation, equivalent multiple paths of the flow are inquired from the path calculation module.

In step S806, the traffic statistics of the flow defined by the user and the total traffic statistics of the topology links are inquired from the statistics module 612.

The display module 66 is configured to display in the network topology graph the static flow observation information configured by the administrator, the flow path, the flow statistics of the flow, the visualization of the link traffic, and provide operations for adding, deleting and modifying the static flow observation and for dragging the flow path, and so on.

The pushing module 68 is configured to push the network topology changes, the static flow configuration changes, and the flow path changes to the front-end for display.

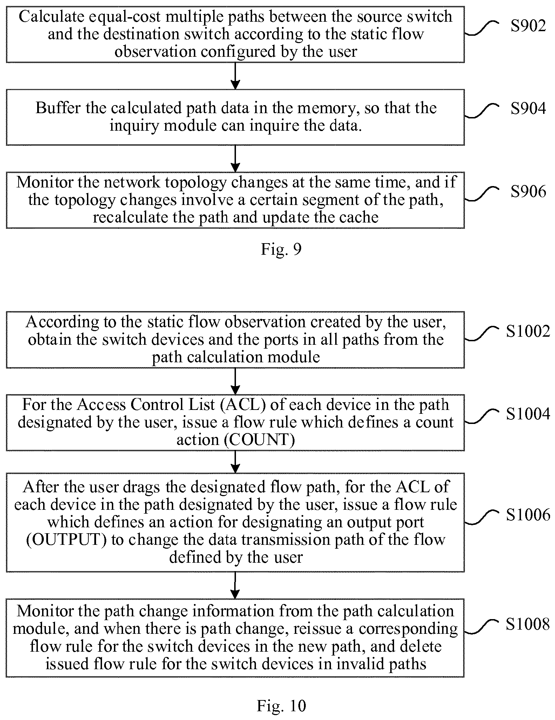

The path calculation module 610 is configured to, according to the source and destination switches defined in the flow observation configured by the administrator, calculate the ECMP between the two switches. Every time when the system is started, according to the source and destination switches defined in the flow observation configured by the administrator, the ECMP between the two switches is calculated, and topology changes are monitored. When the topology is changed, the paths between devices are calculated again. Fig. 9 is a flow chart schematically showing a transmission processing method according to an exemplary embodiment of the present disclosure. As shown in Fig. 9, the method may include the following steps.

In step S902, cqual-costs multiple paths between the source switch and the destination switch are calculated according to the static flow observation configured by the user.

In step S904, the calculated path data is buffered in the memory, so that the inquiry module can inquire the data.

In step S906, the network topology changes are monitored at the same time. If the topology changes involve a certain segment of the path, the path is recalculated and the cache is updated.

The statistics module 612 is configured to perform statistics on the traffic of the flows and the traffic of the links.

The flow control module 614 is configured to, according to the static flow observation created by the user, obtain from the path calculation module switch devices and ports in all paths, and for the Access Control List (ACL) of each device in the path designated by the user, send a flow rule which defines a count action (COUNT). After the user drags the designated flow path, for the ACL of each device in the path designated by the user, a flow rule which defines an action for designating an output port (OUTPUT) is sent to change the data transmission path of the flow defined by the user. At the same time, the flow control module monitors the path change information from the path calculation module, and when there is path change, the flow control module resends a corresponding flow rule for the switch devices in the new path. For the switch devices in invalid paths, the flow control module deletes the issued flow rule. Fig. 10 is a flow chart schematically showing a transmission processing method according to an exemplary embodiment of the present disclosure. As shown in Fig. 10, the method includes the following steps.

In step S1002, according to the static flow observation created by the user, the switch devices and the ports in all paths are obtained from the path calculation module.

In step S1004, for the Access Control List (ACL) of each device in the path designated by the user, a flow rule which defines a count action (COUNT) is issued.

In step S1006, after the user drags the designated flow path, for the ACL of each device in the path designated by the user, a flow rule which defines an action for designating an output port (OUTPUT) is issued to change the data transmission path of the flow defined by the user.

In step S1008, the path change information from the path calculation module is monitored. When there is path change, a corresponding flow rule is reissued for the switch devices in the new path. For the switch devices in invalid paths, the issued flow rule is deleted.

An exemplary embodiment provides a traffic scheduling method. The method further includes defining a static flow observation, and the definition includes a flow definition and a flow path. The flow definition contains VRF, a source IP subnet/mask, a source port, a destination IP subnet/mask, a destination port, and a protocol. The protocol includes TCP, UDP, ICMP, OSPF, SCTP, DCCP, or MPTCP. These parameters all support globbing. The flow path further includes a source switch device and a destination switch device. The equal-cost multiple paths corresponding to the static flow observation are visualized on the display interface. In the network topology graph, the paths are rendered by bolding the links, and the transmission path which the flow is currently going through is rendered by adding an animation effect of flowing along a direction. The link traffic can also be visualized to intuitively display the link traffic state. The link traffic state may be one of normal, early warning, and congestion. In the network topology graph, different colors may be used to mark links, for example, green, orange, and red may be used to render links. If the traffic on a certain path is early warning or congested, the administrator is allowed to drag the flow path in the network topology graph to other equal-cost paths.

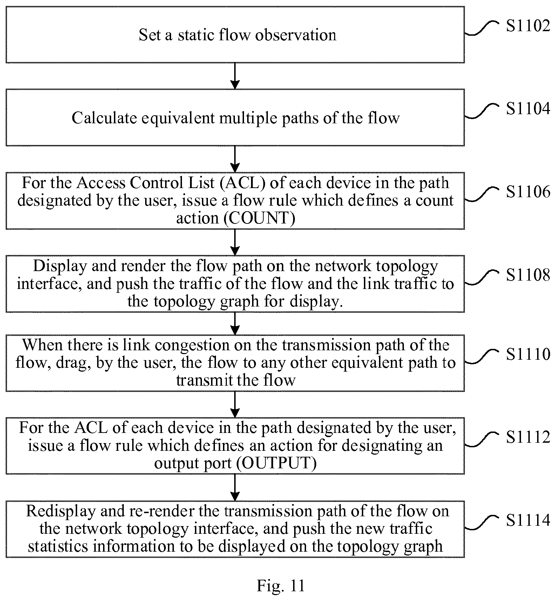

In the exemplary embodiment, according to the static flow observation created by the user, a plurality of equivalent paths corresponding to the flow observation and the transmission paths of the current flow are rendered in the network topology. At the same time, the network topology graph renders the links by three states, i.e., "normal", "early warning" and "congestion". When the user finds that a certain link in the current transmission path of the configured flow is congested, the flow can be dragged to other equivalent paths for transmission by manual dragging in the network topology graph, so as to ensure that the service data of interest to the user can be transmitted normally. Fig. 11 is a transmission processing method according to an exemplary embodiment of the present disclosure. As shown in Fig. 11, the method may include the following steps.

In step S1102, a static flow observation is set.

In step S1104, equivalent multiple paths of the flow are calculated.

In step S1106, for the Access Control List (ACL) of each device in the path designated by the user, a flow rule which defines a count action (COUNT) is issued.

In step S1108, the flow path is displayed and rendered on the network topology interface, and the traffic of the flow and the link traffic are pushed to the topology graph for display.

In step S 1110, when there is link congestion on the transmission path of the flow, the user drags the flow to any other equivalent path to transmit the flow.

In step S 1112, for the ACL of each device in the path designated by the user, a flow rule which defines an action for designating an output port (OUTPUT) is issued.

In step S1114, the transmission path of the flow is redisplayed and re-rendered on the network topology interface, and the new traffic statistics information is pushed to be displayed on the topology graph.

It is obvious to those skilled in the art that each module or each step of the present disclosure described above can be implemented by common computing devices, which can be centralized on a single computing device or distributed over a network formed by multiple computing devices. The steps of the present disclosure may be implemented with program codes executable by a computing device, and the codes may be stored in a storage device for execution by a computing device. In some cases, the shown or described steps may be performed in an order different from that described herein, or may be made into individual integrated circuit modules, or a plurality of modules or steps may be made into a single integrated circuit module. The present disclosure is not limited to any specific combination of hardware and software.

The foregoing descriptions are merely exemplary embodiments of the present disclosure and are not intended to limit the present disclosure. For those skilled in the art, the present disclosure may have various modifications and changes as far they fall under the scope of the claims.

## Claims

1. A transmission processing method, comprising:
receiving (S102) from a user interface a transfer request for transferring a flow on a transmission path where link congestion occurs to a preset path to transmit the flow, wherein the preset path is one of preset equal-cost multiple paths, ECMPs, of the transmission path; and according to the transfer request, transferring (S104) the flow on the transmission path where link congestion occurs to the preset path to transmit the flow;
wherein the step of transferring (S104), according to the transfer request, the flow on the transmission path where link congestion occurs to the preset path to transmit the flow, comprises:
for an Access Control List, ACL, of each device in the preset path, sending (S1106) to the ACL a first flow rule which defines a count action;
for the ACL of the each device in the preset path, sending (S1112) to the ACL a second flow rule which defines an output port; and
according to the first flow rule and the second flow rule, transferring the flow on the transmission path where link congestion occurs to the preset path to transmit the flow; and wherein before receiving from a user a transfer request for transferring a flow on a transmission path where link congestion occurs to a preset path to transmit the flow, the method further comprises:
receiving setting information for setting a flow path by the user, wherein the setting information comprises: Virtual Routing Forwarding, VRF, a source IP subnet/mask, a source port, a source switch, a destination IP subnet/mask, a destination port, a destination switch, or a protocol, wherein the protocol comprises any one of a Transmission Control Protocol, TCP, a User Datagram Protocol, UDP , an Internet Control Messages Protocol, ICMP, an Open Shortest Path First, OSPF, protocol, a Stream Control Transmission Protocol, SCTP, a Datagram Congestion Control Protocol, DCCP , and a Multipath Transmission Control Protocol, MPTCP, setting the flow path according to the setting information; and calculating the preset equal-cost multiple paths of the flow according to a setting result.

2. The method according to claim 1, wherein after calculating the equal-cost multiple paths of the flow according to a setting result, the method further comprises:
marking the equal-cost multiple paths of the flow in a topology structure of the flow path.

3. The method according to claim 1, further comprising:
displaying on a display interface the topology structure of the flow path and displaying a traffic state of the flow path in the topology structure of the flow path, wherein the traffic state comprises any one of normal, early warning, and congestion.

4. The method according to any one of claims 2 to 3, wherein after according to the transfer request, transferring the flow on the transmission path where link congestion occurs to the preset path to transmit the flow, the method further comprises:
updating the topology structure of the flow path.

5. A transmission processing device, comprising:
a first receiving module (22) configured to receive from a user interface a transfer request for transferring a flow on a transmission path where link congestion occurs to a preset path to transmit the flow, wherein the preset path is one of preset equal-cost multiple paths, ECMPs, of the transmission path; and
a transmission module (24) configured to, according to the transfer request, transfer the flow on the transmission path where link congestion occurs to the preset path to transmit the flow;
wherein the transmission module (24) comprises:
a sending unit (32) configured to, for an Access Control List, ACL, of each device in the preset path, sending to the ACL a first flow rule which defines a count action; and for the ACL of the each device in the preset path, send to the ACL a second flow rule which defines an output port; and
a transmission unit (34) configured to, according to the first flow rule and the second flow rule, transfer the flow on the transmission path where link congestion occurs to the preset path to transmit the flow; and
wherein the device further comprises:
a second receiving module (42) configured to receive setting information for setting a flow path by the user, wherein the setting information comprises: Virtual Routing Forwarding, VRF, a source IP subnet/mask, a source port, a source switch, a destination IP subnet/mask, a destination port, a destination switch, or a protocol, wherein the protocol comprises any one of a Transmission Control Protocol, TCP, a User Datagram Protocol, UDP , an Internet Control Messages Protocol, ICMP, an Open Shortest Path First, OSPF, protocol, a Stream Control Transmission Protocol, SCTP, a Datagram Congestion Control Protocol, DCCP , and a Multipath Transmission Control Protocol, MPTCP; a calculation module (46) configured to calculate the preset equal-cost multiple paths of the flow according to a setting result.

6. The device according to claim 5, further comprising:
a marking module (52) configured to mark the preset equal-cost multiple paths of the flow in a topology structure of the flow path.

7. A computer program, which when executing on a processor, performs a method according to any one of claims 1 to 4.

## Patentansprüche

1. Übertragungsverarbeitungsverfahren, umfassend:
Empfangen (S102) einer Verlagerungsanforderung von einer Benutzerschnittstelle, um einen Fluss auf einem Übertragungspfad, auf dem es zu Verbindungsüberlastung kommt, zu einem voreingestellten Pfad zu verlagern, um den Fluss zu übertragen, wobei es sich bei dem voreingestellten Pfad um einen von voreingestellten mehreren Pfaden mit gleichen Kosten, Equal-Cost Multiple Paths, ECMPs, des Übertragungspfades handelt; und Verlagern (S104) des Flusses auf dem Übertragungspfad, auf dem es zu Verbindungsüberlastung kommt, gemäß der Verlagerungsanforderung zu dem voreingestellten Pfad, um den Fluss zu übertragen;
wobei der Schritt des Verlagerns (S104) des Flusses auf dem Übertragungspfad, auf dem es zu Verbindungsüberlastung kommt, gemäß der Verlagerungsanforderung zu dem voreingestellten Pfad, um den Fluss zu übertragen, umfasst:
Senden (S1106), für eine Zugriffssteuerungsliste, Access Control List, ACL, jeder Vorrichtung in dem voreingestellten Pfad, einer ersten Flussregel, die einen Zählvorgang definiert, an die ACL;
Senden (S1112), für die ACL jeder Vorrichtung in dem voreingestellten Pfad, einer zweiten Flussregel, die einen Ausgangsport definiert, an die ACL; und
Verlagern des Flusses auf dem Übertragungspfad, auf dem es zu Verbindungsüberlastung kommt, gemäß der ersten Flussregel und der zweiten Flussregel zu dem voreingestellten Pfad, um den Fluss zu übertragen; und wobei das Verfahren vor dem Empfangen einer Verlagerungsanforderung von einem Benutzer, um einen Fluss auf einem Übertragungspfad, auf dem es zu Verbindungsüberlastung kommt, zu einem voreingestellten Pfad zu verlagern, um den Fluss zu übertragen, weiter umfasst:
Empfangen von Einstellungsinformationen, um einen Flusspfad durch den Benutzer einzustellen, wobei die Einstellungsinformationen umfassen: Virtual Routing Forwarding, VRF, ein(e) Quell-IP-Subnetz/Maske, einen Quellport, einen Quell-Switch, ein(e) Ziel-IP-Subnetz/Maske, einen Zielport, einen Ziel-Switch, oder ein Protokoll, wobei das Protokoll eines aus einem Transmission Control Protocol, TCP, einem User Datagram Protocol, UDP, einem Internet Control Messages Protocol, ICMP, einem Open Shortest Path First-, OSPF, Protokoll, einem Stream Control Transmission Protocol, SCTP, einem Datagram Congestion Control Protocol, DCCP, und einem Multipath Transmission Control Protocol, MPTCP, umfasst, Einstellen des Flusspfades gemäß den Einstellungsinformationen; und Berechnen der voreingestellten mehreren Pfade mit gleichen Kosten des Flusses gemäß einem Einstellungsergebnis.

2. Verfahren nach Anspruch 1, wobei das Verfahren nach dem Berechnen der mehreren Pfade mit gleichen Kosten des Flusses gemäß einem Einstellungsergebnis weiter umfasst:
Markieren der mehreren Pfade mit gleichen Kosten des Flusses in einer Topologiestruktur des Flusspfades.

3. Verfahren nach Anspruch 1, weiter umfassend:
Anzeigen der Topologiestruktur des Flusspfades auf einer Anzeigeschnittstelle, und Anzeigen eines Traffic-Status des Flusspfades in der Topologiestruktur des Flusspfades, wobei der Traffic-Status eines aus Normal, Frühwarnung, und Überlastung umfasst.

4. Verfahren nach einem der Ansprüche 2 bis 3, wobei das Verfahren nach dem Verlagern des Flusses auf dem Übertragungspfad, auf dem es zu Verbindungsüberlastung kommt, gemäß der Verlagerungsanforderung zu dem voreingestellten Pfad, um den Fluss zu übertragen, weiter umfasst:
Aktualisieren der Topologiestruktur des Flusspfades.

5. Übertragungsverarbeitungsvorrichtung, umfassend:
ein erstes Empfangsmodul (22), das so ausgelegt ist, dass es von einer Benutzerschnittstelle eine Verlagerungsanforderung empfängt, um einen Fluss auf einem Übertragungspfad, auf dem es zu Verbindungsüberlastung kommt, zu einem voreingestellten Pfad zu verlagern, um den Fluss zu übertragen, wobei es sich bei dem voreingestellten Pfad um einen von voreingestellten mehreren Pfaden mit gleichen Kosten, ECMPs, des Übertragungspfades handelt; und
ein Übertragungsmodul (24), das so ausgelegt ist, dass es den Fluss auf dem Übertragungspfad, auf dem es zu Verbindungsüberlastung kommt, gemäß der Verlagerungsanforderung zu dem voreingestellten Pfad verlagert, um den Fluss zu übertragen;
wobei das Übertragungsmodul (24) umfasst:
eine Sendeeinheit (32), die so ausgelegt ist, dass sie für eine Zugriffssteuerungsliste, ACL, jeder Vorrichtung in dem voreingestellten Pfad eine erste Flussregel, die einen Zählvorgang definiert, an die ACL sendet; und für die ACL jeder Vorrichtung in dem voreingestellten Pfad eine zweite Flussregel, die einen Ausgangsport definiert, an die ACL sendet; und
eine Übertragungseinheit (34), die so ausgelegt ist, dass sie den Fluss auf dem Übertragungspfad, auf dem es zu Verbindungsüberlastung kommt, gemäß der ersten Flussregel und der zweiten Flussregel zu dem voreingestellten Pfad verlagert, um den Fluss zu übertragen; und
wobei die Vorrichtung weiter umfasst:
ein zweites Empfangsmodul (42), das so ausgelegt ist, dass es Einstellungsinformationen empfängt, um einen Flusspfad durch den Benutzer einzustellen,
wobei die Einstellungsinformationen umfassen:
Virtual Routing Forwarding, VRF, ein(e) Quell-IP-Subnetz/Maske, einen Quellport, einen Quell-Switch, ein(e) Ziel-IP-Subnetz/Maske, einen Zielport, einen Ziel-Switch, oder ein Protokoll, wobei das Protokoll eines aus einem Transmission Control Protocol, TCP, einem User Datagram Protocol, UDP, einem Internet Control Messages Protocol, ICMP, einem Open Shortest Path First-, OSPF, Protokoll, einem Stream Control Transmission Protocol, SCTP, einem Datagram Congestion Control Protocol, DCCP, und einem Multipath Transmission Control Protocol, MPTCP, umfasst;
ein Berechnungsmodul (46), das so ausgelegt ist, dass es die voreingestellten mehreren Pfade mit gleichen Kosten des Flusses gemäß einem Einstellungsergebnis berechnet.

6. Vorrichtung nach Anspruch 5, weiter umfassend:
ein Markiermodul (52), das so ausgelegt ist, dass es die voreingestellten mehreren Pfade mit gleichen Kosten des Flusses in einer Topologiestruktur des Flusspfades markiert.

7. Computerprogramm, das, wenn es auf einem Prozessor ausgeführt wird, ein Verfahren nach einem der Ansprüche 1 bis 4 durchführt.

## Revendications

1. Procédé de traitement de transmission, comprenant les étapes consistant à :
recevoir (S102), depuis une interface utilisateur, une demande de transfert pour transférer un flux sur un trajet de transmission où un encombrement de liaison se produit vers un trajet prédéfini pour transmettre le flux, dans lequel le trajet prédéfini est l'un parmi de multiples trajets à coût égal prédéfinis, ECMP, du trajet de transmission ; et
selon la demande de transfert, transférer (S104) le flux sur le trajet de transmission où un encombrement de liaison se produit vers le trajet prédéfini pour transmettre le flux ;
dans lequel l'étape consistant à transférer (S104), selon la demande de transfert, le flux sur le trajet de transmission où un encombrement de liaison se produit vers le trajet prédéfini pour transmettre le flux comprend les étapes consistant à :
pour une liste de contrôle d'accès, ACL, de chaque dispositif dans le trajet prédéfini, envoyer (S1106) à la ACL une première règle de flux qui définit une action de comptage ;
pour la ACL de chaque dispositif dans le trajet prédéfini, envoyer (S1112) à la ACL une seconde règle de flux qui définit un orifice de sortie ; et
selon la première règle de flux et la seconde règle de flux, transférer le flux sur le trajet de transmission où un encombrement de liaison se produit vers le trajet prédéfini pour transmettre le flux ; et
dans lequel, avant l'étape consistant à recevoir d'un utilisateur une demande de transfert pour transférer un flux sur un trajet de transmission où un encombrement de liaison se produit vers un trajet prédéfini pour transmettre le flux, le procédé comprend en outre les étapes consistant à :
recevoir des informations de définition pour définir un trajet de flux par l'utilisateur, dans lequel les informations de définition comprennent : le routage et transfert virtuels, VRF, un masque de sous-réseau IP source, un port source, un commutateur source, un masque de sous-réseau IP de destination, un port de destination, un commutateur de destination, ou un protocole, dans lequel le protocole comprend l'un quelconque parmi un protocole de commande de transmission, TCP, un protocole de datagramme utilisateur, UDP, un protocole de messages de commande Internet, ICMP, un protocole Open Shortest Path First, OSPF, un protocole de transmission de commande de flux, SCTP, un protocole de commande d'encombrement de datagramme, DCCP, et un protocole de commande de transmission à multiples trajets, MPTCP, définissant le trajet de flux selon les informations de définition ; et calculer les multiples trajets à coût égal prédéfinis du flux selon un résultat de définition.

2. Procédé selon la revendication 1, dans lequel, après l'étape consistant à calculer les multiples trajets à coût égal du flux selon un résultat de définition, le procédé comprend en outre l'étape consistant à :
marquer les multiples trajets à coût égal du flux dans une structure de topologie du trajet de flux.

3. Procédé selon la revendication 1, comprenant en outre l'étape consistant à :
afficher sur une interface d'affichage la structure de topologie du trajet de flux et afficher un état de trafic du trajet de flux dans la structure de topologie du trajet de flux, dans lequel l'état de trafic comprend l'un quelconque parmi normal, avertissement précoce, et encombrement.

4. Procédé selon l'une quelconque des revendications 2 à 3, dans lequel, après, selon la demande de transfert, l'étape consistant à transférer le flux sur le trajet de transmission où un encombrement de liaison se produit vers le trajet prédéfini pour transmettre le flux, le procédé comprend en outre l'étape consistant à :
mettre à jour la structure de topologie du trajet de flux.

5. Dispositif de traitement de transmission, comprenant :
un premier module de réception (22) configuré pour recevoir d'une interface utilisateur une demande de transfert pour transférer un flux sur un trajet de transmission où un encombrement de liaison se produit vers un trajet prédéfini pour transmettre le flux, dans lequel le trajet prédéfini est l'un parmi de multiples trajets à coût égal prédéfinis, ECMP, du trajet de transmission ; et
un module de transmission (24) configuré pour, selon la demande de transfert, transférer le flux sur le trajet de transmission où un encombrement de liaison se produit vers le trajet prédéfini pour transmettre le flux ;
dans lequel le module de transmission (24) comprend :
une unité d'envoi (32) configurée pour, pour une liste de contrôle d'accès, ACL, de chaque dispositif dans le trajet prédéfini, envoyer à la ACL une première règle de flux qui définit une action de comptage ; et pour la ACL de chaque dispositif dans le trajet prédéfini, envoyer à la ACL une seconde règle de flux qui définit un orifice de sortie ; et
une unité de transmission (34) configurée pour, selon la première règle de flux et la seconde règle de flux, transférer le flux sur le trajet de transmission où un encombrement de liaison se produit vers le trajet prédéfini pour transmettre le flux ; et
dans lequel le dispositif comprend en outre :
un second module de réception (42) configuré pour recevoir des informations de définition pour définir un trajet de flux par l'utilisateur, dans lequel les informations de définition comprennent :
le routage et transfert virtuels, VRF, un masque de sous-réseau IP source, un port source, un commutateur source, un masque de sous-réseau IP de destination, un port de destination, un commutateur de destination, ou un protocole, dans lequel le protocole comprend l'un quelconque parmi un protocole de commande de transmission, TCP, un protocole de datagramme utilisateur, UDP, un protocole de messages de commande Internet, ICMP, un protocole Open Shortest Path First, OSPF, un protocole de transmission de commande de flux, SCTP, un protocole de commande d'encombrement de datagramme, DCCP, et un protocole de commande de transmission à multiples trajets, MPTCP ;
un module de calcul (46) configuré pour calculer les multiples trajets à coût égal prédéfinis du flux selon un résultat de définition.

6. Dispositif selon la revendication 5, comprenant en outre :
un module de marquage (52) configuré pour marquer les multiples trajets à coût égal prédéfinis du flux dans une structure de topologie du trajet de flux.

7. Programme informatique, qui, lorsqu'il est exécuté sur un processeur, effectue un procédé selon l'une quelconque des revendications 1 à 4.
